# EUROPÄISCHE PATENTSCHRIFT

(11) **EP 0 487 998 B1**
(45) Veröffentlichungstag und Bekanntmachung des Hinweises auf die Patenterteilung: **22.05.1996**
(21) Anmeldenummer: 91119577.4
(22) Anmeldetag: 16.11.1991
(51) Int. Cl.: B01D 69/08, B01D 69/12, B01D 53/22

(54) **Gasmembrankapillarherstellung**
Production of membrane capillaries for gas separation
Fabrication de membranes capillaires de séparation de gaz

(30) Priorität: 28.11.1990 DE 4037817
(43) Veröffentlichungstag der Anmeldung: 03.06.1992
(73) Patentinhaber: Akzo Nobel N.V., NL-6824 BM Arnhem (NL)
(72) Erfinder: Sluma, Heinz-Dieter, Dr., W-8754 Grossostheim (DE); Weizenhöfer, Robert, Dr., W-8765 Erlenbach (DE); Leeb, Alfons, W-8751 Kleinwallstadt (DE); Bauer, Karl, W-8751 Dammbach (DE)
(74) Vertreter: Fett, Günter

(56) Entgegenhaltungen:
- EP-A- 0 206 354
- FR-A- 2 336 962

## Beschreibung

Die Erfindung betrifft ein Verfahren zur Herstellung einer Mehrschichten-Membran für die Trennung von Gasgemischen, wobei die Membran aus einer polymeren Stützmembran mit einem Hohlraumvolumen von mehr als 50% und einer Beschichtung aus wenigstens zwei Trenn-Schichten aus wenigstens zwei unterschiedlichen Polymeren besteht, sowie eine nach diesem Verfahren hergestellte Membran.

Aus der US-PS 3,874,986 ist bereits eine beschichtete Membran bekannt, die aus einem porösen Träger, einem ultradünnen Film aus einem Organopolysiloxanpolycarbonat-Copolymer auf dem Träger und einem ultradünnen darüber gelegten Film aus Polyphenylenoxid besteht. Die Herstellung erfolgt nach dem "Ward-Prozeß" durch Verformen der Polymeren auf eine begrenzte flüssige Oberfläche. Die erhaltene Membran ist für die Trennung von Gasgemischen, insbesondere von O₂/N₂-Gemischen, geeignet.

In der EP-OS 0 124 028 wird die Herstellung von für die Gastrennung geeigneten Membranen, auch Hohlfäden bzw. Hohlkapillaren beschrieben. Die Herstelung erfolgt duch gezielte Verstreckung eines schmelzverformten thermoplastischen kristallinen Polymeren, insbesondere Polyolefinen.

Im US-PS 4,230 463 wird die Herstellung von Mehrkomponentenmembranen für die Gastrennung beschrieben. Poröse Hohlfäden werden dazu in ein verdünntes oder unverdünntes Beschichtungsmaterial getaucht und gegebenenfalls durch einen Unterdruck im Inneren des porösen Hohlfadens in die Poren hineingezogen. Lösungsmittel läßt man dann, falls erforderlich, verdampfen.

Aus der DE-AS 26 58 408 ist eine faserverstärkte Ultrafiltrationsmembran bekannt, in der ein verstärkendes Hohlgeflecht gezielt unsymmetrisch nur in die Wände der Membran eingebettet ist. Mit ihr wird eine semipermeable Membran bereitgestellt, die in ihrer Wasserdurchlässigkeit nicht verschlechtert wird, selbst wenn sie mit heißem Wasser in Berührung gebracht oder getrocknet wird. Zur Herstellung einer solchen faserverstärkten Membran wird in einer Spinndüse bevorzugt eine Acrylnitrilcopolymerisat-Lösung mit dem Hohlgeflecht in Berührung gebracht, das Hohlgeflecht mit der Polymerlösung bis über die Innenwand des Hohlgeflechts hinaus imprägniert und aus der Rundbohrung der Düse beide gemeinsam abgezogen. Nach der Koagulation des Polymerisats in Wasser wird die faserverstärkte Ultrafiltrationsmembran auf eine Rolle gewickelt.

Aufgabe der vorliegenden Erfindung war es, den Auftrag von Trennschichten auf eine Stützmembran in Form einer Hohlkapillare dahingehend zu verbessern, daß der Auftrag kontinuierlich in gleichmäßiger extrem dünner Schicht ermöglicht wird und dabei Ungleichmäßigkeiten der Stützmembranen ausgeglichen werden.

Gelöst wird die Aufgabe durch ein Verfahren gemäß dem Oberbegriff des Anspruchs 1, das dadurch gekennzeichnet ist, daß die als Stützmembran dienende Hohlkapillare durch die zentrale Bohrung einer Düse geführt wird und daß die Düse einen oder mehrere konzentrische Ringschlitze und/oder Ringnuten aufweist, durch die jeweils eine Lösung der die Trennschichten bildenden Polymeren auf die Stützmembran aufgetragen werden, wobei die Düse in einem abgeschlossenen Raum mündet, in dem das bzw. die Lösungsmittel der Polymerlösungen verdampft und entfernt werden und die beschichtete Stützmembran aus dem Raum abgezogen und gegebenenfalls nach einer Nachbehandlung mit Wärme und/oder Flüssigkeiten aufgewickelt wird.

Mit dem erfindungsgemäßen Verfahren erzielt man einen absolut gleichmäßigen Auftrag der Schicht, weil durch die Ringschlitze und/oder Ringnuten Toträume vermieden werden und der Auftrag nicht von zufälligen Oberflächeneigenschaften der Stützmembranen beim Dippen abhängig ist. Beim erfindungsgemäßen Verfahren altert die Polymerlösung nicht und führt deshalb auch nicht zu Inhomogenitäten der Beschichtung. Gerade diese Vorteile haben für den kontinuierlichen Betrieb über einen längeren Zeitraum besondere Bedeutung.

Nach einer Ausführungsform der Erfindung läßt man die Lösung(en) unter dem eigenen hydrostatischen Druck stehend frei aus den Ringschlitzen und/oder Ringnuten ausfließen. Dieses ist besonders dann angebracht, wenn die Lösung niedrig viskos ist.

Bei höheren Viskositäten wird vorzugsweise die Lösung(en) unter dem Druck, der durch Dosierpumpen erzeugt wird, aus den Ringschlitzen und/oder Ringnuten ausgepreßt wird. Die Höhe des Druckes hängt von der Schlitzbreite, Schlitzlänge, der Viskosität der Lösung, die vorgesehene Schichtdicke sowie der Durchlaufgeschwindigkeit der Stützmembran ab. Deshalb wird in Ausgestaltung der Erfindung der Druck je nach Schlitzbreite eingestellt und konstant gehalten. Der konstante Druck läßt sich einerseits über ein Niveaugefäß, den Pumpendruck oder ein Gepolster aufrechterhalten.

Hinsichtlich der Lösungsmittel für die Polymerlösungen ist man zunächst nicht begrenzt, sofern die Löslichkeit gegeben ist. Aus Gründen der Toxologie und des Umweltschutzes sollten möglichst halogenhaltige Lösungsmittel vermieden werden. Das Lösungsmittel sollte selbstverständlich die Stützmembran nicht angreifen. Andererseits sollte es um eine leichte Verdampfung sicherzustellen, relativ leichtflüchtig sein.

Da sich die für die Trennschichten verwendeten Polymere trotz unterschiedlichen chemischen Aufbaus deutlich unterscheiden, kann es von Vorteil sein, gleiche Lösungsmittel einzusetzen. Hier ist auf die einfachere Art der Rückgewinnung hinzuweisen.

Andererseits können aber auch erfindungsgemäß bessere Ergebnisse erhalten werden, wenn für unterschiedliche Polymerlösungen unterschiedliche Lösungsmittel eingesetzt werden. Das ist beispielsweise dann der Fall, wenn Viskositätsunterschiede verwirklicht werden sollen.

Um deutlich abgegrenzte Schichten zu erzeugen, werden in einer Ausführungsform der Erfindung Polymerlösungen eingesetzt, die nicht oder nur in geringem Umfange miteinander mischbar sind.

Für die Gastrennung insbesondere von O₂-N₂-Gemischen haben sich bereits eine Vielzahl von Polymeren und Polymerkombinationen bewährt. Im Rahmen der vorliegenden Erfindung hat es sich als günstig herausgestellt, für die der Stützmembran benachbarte Schicht ein organisches Polymer mit Silanseitengruppen einzusetzen. Solche Polymeren sind beispielsweise Polytrimethylsilylpropin, Polyvinyltrimethylsilan, Polymethylsilyl-2-butin, 1-Methyl-2-(1,1,3,3' Tetramethyl-1,3' disila-butyl)-actylen.

Als weitere Polymere für die Beschichtung, um selektive Permeabilitätseigenschaften zu erhalten, sind aromatische Polyester und/oder ein aromatische Polyimide und/oder ein aromatische Polyamide und/oder aromatische Polysufone und/oder Polyphenylenoxide im Rahmen der vorliegenden Erfindung bevorzugt.

Zur Vereinfachung der Verfahrensdurchführung insbesondere beim Einfädeln der Stützmembran ist es von großem Vorteil, wenn die Düse als teilbare Düse ausgebildet wird. Vorzugsweise wird deshalb zum Einführen der als Stützmembran dienenden Hohlkapillare die teilbare Düse geöffnet und anschließend wieder zusammengesetzt. Auch für die Reinigung ist eine solche Düse von Vorteil.

Sowohl hinsichtlich des Raumbedarfes als auch zur besseren Überwachung ist es von Vorteil, daß eine Düse eingesetzt wird, die mehrere zentrale Bohrungen mit je wenigstens zwei konzentrischen Ringschlitzen und/oder Ringnuten aufweist.

Dabei ergibt sich eine Vereinfachung hinsichtlich der Förderung der Polymerlösungen dadurch, daß den entsprechenden Ringschlitzen und/oder Ringnuten die jeweilige Polymerlösung zugeführt wird.

Sollen mehrere Polymerschichten aufgetragen werden, so müssen auch eine entsprechende Anzahl von Düsen entlang dem Lauf der Stützmembranhohlkapillaren angeordnet werden. Eine Vereinfachung läßt sich erfindungsgemäß dadurch erreichen, daß eine Düse eingesetzt wird, die wenigstens zwei konzentrische Ringschlitze und/oder Ringnuten für jede zentrale Bohrung aufweist, wobei die Ringschlitze und/oder Ringnuten in einem deutlichen Abstand voneinander münden.

Der Abstand sollte so groß sein, daß die Vermischung der einzelnen Schichten weitgehend vermieden wird.

Gegenstand der Erfindung ist ebenfalls eine nach dem zuvor beschriebenen Verfahren hergestellte Membran für die Gastrennung, wobei die Membran zusammengesetzt ist aus
- einer Stützmembran, die für die Beschichtung geeignet ist,
- einer ersten Beschichtung bestehend aus einem die Schicht aufbauenden Polymer, das ein organisches Polymer mit Silanseitengruppen ist, wobei die Dicke der Schicht im Bereich zwischen 0,1 und 10 µm liegt und die Schicht eine Selektivität gegenüber O₂/N₂ zwischen 1,2 und 3 und eine Sauerstoff-Permeabilität zwischen 5 und 5000.10⁻¹² m/Pa.s besitzt,
- einer zweiten Beschichtung, bestehend aus einem die Schicht aufbauenden Polymer, das ein aromatischer Polyester und/oder ein aromatisches Polyimid und/oder ein aromatisches Polyamid und/oder ein aromatisches Polysulfon und/oder ein Polyphenylenoxid ist, wobei die Dicke der Schicht im Bereich zwischen 0,01 und 1 µm liegt und die Schicht eine Selektivität gegenüber Sauerstoff/Stickstoff zwischen 1 und 10 und eine Sauerstoff-Permeabilität zwischen 0,1 und 10.10⁻¹² m/Pa.s besitzt,
- und gegebenenfalls einer dritten Beschichtung, bestehend aus einem Polymer, das sich von wenigstens einem der Polymeren der ersten und zweiten Beschichtung unterscheidet,
- wobei die Abtrennfestigkeit der Mehrschichten-Beschichtung gegen Druck höher ist als 5 bar.

In einer besonderen Ausgestaltung der Erfindung liegt die dritte Beschichtung zwischen der ersten und der zweiten Beschichtung.

In einer anderen besonderen Ausgestaltung der Erfindung wird die dritte Beschichtung auf die zweite Beschichtung aufgetragen.

Es ist aber auch möglich, mehr als drei Schichten auf die Membran aufzutragen.

### Beispiel 1:

Eine geeignete Stützmembran (Hohlfaden) mit einem Außendurchmesser von 200 µm und einer Oberflächen-Porengröße von 0,02 µm (bestimmt durch ein Bildanalyse-System) wird durch eine Beschichtungsdüse mit einer zentralen Bohrung von 230 µm und einer Ringnut von 1 mm mit einer Abzugsgeschwindigkeit von 10 m/min geführt. Durch die Ringnut wird bei Raumtemperatur eine Lösung von 2,5 Gew.% Polytrimethylsilylpropin in Toluol bei einem Druck von 0,1 bar zugeführt. Der beschichtete Hohlfaden wird durch einen Infrarot-Trockner geleitet, in dem das Lösungsmittel verdampft. Die Dicke der aufgetragenen Schicht beträgt 2 µm.

Die so erhaltene, einfach beschichtete Membran kann kontinuierlich oder diskontinuierlich einem oder mehreren weiteren Prozeßschritten zugeführt werden, um eine Mehrschichtenmembran zu erzeugen.

### Beispiel 2:

Eine nach Beispiel 1 hergestellte, einfach beschichtete Membran wurde in einem kontinuierlich anschließenden Prozeßschritt durch eine Beschichtungsdüse mit einer zentralen Bohrung von 230 µm und einer Ringnut von 1 mm mit einer Abzugsgeschwindigkeit von 10 m/min geführt. Durch die Ringnut wird bei Raumtemperatur eine Lösung von 2,5 Gew.% Polytrimethylsilylpropin in Toluol bei einem Druck von 0,1 bar zugeführt. Der zweifach beschichtete Hohlfaden wird durch einen Infrarot-Trockner geleitet, in dem das Lösungsmittel verdampft. Die erhaltene Membran kann aufgewickelt und in Gastrennmodule eingebaut werden. Die Dicke der aufgetragenen Schichten beträgt 4 µm. Die Sauerstoff-Durchlässigkeit der Membran wurde mit 50.10⁻¹² m/Pa.s bestimmt.

### Beispiel 3:

Eine nach Beispiel 1 hergestellte, einfach beschichtete Membran wurde in einem kontinuierlich anschließenden Prozeßschritt durch eine Beschichtungsdüse mit einer zentralen Bohrung von 230 µm und einer Ringnut von 1 mm mit einer Abzugsgeschwindigkeit von 10 m/min geführt. Durch die Ringnut wird bei Raumtemperatur eine Lösung von 1,0 Gew.% eines Stickstoff-Sauerstoff-selektiven, aromatischen Polyesters in Dioxan bei einem Druck von 10 mbar zugeführt. Der zweifach beschichtete Hohlfaden wird durch einen Infrarot-Trockner geleitet, in dem das Lösungsmittel verdampft. Die erhaltene Membran kann aufgewickelt und in Gastrennmodule eingebaut werden.

Die Dicke der aufgetragenen Schichten beträgt insgesamt ca. 2 µm. Die Sauerstoff-Durchlässigkeit der beschichteten Membran wurde mit 0,2.10⁻¹² m/Pa.s bestimmt. Die Selektivität gegenüber Sauerstoff und Stickstoff betrug α_{O2/N2}=5

## Patentansprüche

1. Verfahren zur Herstellung einer Mehrschichten-Membran für die Trennung von Gasgemischen, wobei die Membran aus einer polymeren Stützmembran mit einem Hohlraumvolumen von mehr als 50% und einer Beschichtung aus wenigstens zwei Trenn-Schichten aus wenigstens zwei unterschiedlichen Polymeren besteht, dadurch gekennzeichnet, daß die als Stützmembran dienende Hohlkapillare durch die zentrale Bohrung einer Düse geführt wird und daß die Düse einen oder mehrere konzentrische Ringschlitze und/oder Ringnuten aufweist, durch die jeweils eine Lösung der die Trennschichten bildenden Polymeren auf die Stützmembran aufgetragen werden, wobei die Düse in einem abgeschlossenen Raum mündet, in dem das bzw. die Lösungsmittel der Polymerlösungen verdampft und entfernt werden und die beschichtete Stützmembran aus dem Raum abgezogen und gegebenenfalls nach einer Nachbehandlung mit Wärme und/oder Flüssigkeiten aufgewickelt wird.

2. Verfahren nach Anspruch 1, dadurch gekennzeichnet, daß man die Lösung(en) unter dem eigenen hydrostatischen Druck stehend frei aus den Ringschlitzen und/oder Ringnuten ausfließen läßt.

3. Verfahren nach Anspruch 1, dadurch gekennzeichnet, daß die Lösung(en) unter dem Druck, der durch Dosierpumpen erzeugt wird, aus den Ringschlitzen und/oder Ringnuten ausgepreßt wird.

4. Verfahren nach den Ansprüchen 2 oder 3, dadurch gekennzeichnet, daß der Druck je nach Schlitzbreite eingestellt und konstant gehalten wird.

5. Verfahren nach einem oder mehreren der Ansprüche 1 bis 4, dadurch gekennzeichnet, daß für unterschiedliche Polymerlösungen unterschiedliche Lösungsmittel eingesetzt werden.

6. Verfahren nach einem oder mehreren der Ansprüche 1 bis 5, dadurch gekennzeichnet, daß die Polymerlösungen nicht oder nur in geringem Umfange miteinander mischbar sind.

7. Verfahren nach einem oder mehreren der Ansprüche 1 bis 6, dadurch gekennzeichnet, daß eines der die Trennschicht aufbauenden Polymere ein organisches Polymer mit Silanseitengruppen ist.

8. Verfahren nach einem oder mehreren der Ansprüche 1 bis 7, dadurch gekennzeichnet, daß als eines der die Trennschicht aufbauenden Polymere ein aromatischer Polyester und/oder ein aromatisches Polyimid und/oder ein aromatisches Polyamid und/oder ein aromatisches Polysulfon und/oder ein Polyphenylenoxid eingesetzt wird.

9. Verfahren nach einem oder mehreren der Ansprüche 1 bis 8, dadurch gekennzeichnet, daß die Düse als teilbare Düse ausgebildet wird.

10. Verfahren nach Anspruch 9, dadurch gekennzeichnet, daß zum Einführen der als Stützmembran dienenden Hohlkapillare die teilbare Düse geöffnet und anschließend wieder zusammengesetzt wird.

11. Verfahren nach einem oder mehreren der Ansprüche 1 bis 10, dadurch gekennzeichnet, daß eine Düse eingesetzt wird, die mehrere zentrale Bohrungen mit je wenigstens zwei konzentrischen Ringschlitzen und/oder Ringnuten aufweist.

12. Verfahren nach Anspruch 11, dadurch gekennzeichnet, daß den entsprechenden Ringschlitzen und/oder Ringnuten die jeweilige Polymerlösung aus einem verbundenem Kanalsystem zugeführt wird.

13. Verfahren nach einem der Ansprüche 1 bis 12, dadurch gekennzeichnet, daß eine Düse eingesetzt wird, die wenigstens zwei konzentrische Ringschlitze und/oder Ringnuten für jede zentrale Bohrung aufweist, wobei die Ringschlitze und/oder Ringnuten in einem deutlichen Abstand voneinander münden.

14. Membran für die Gastrennung hergestellt nach einem Verfahren gemäß der Ansprüche 1 bis 13, dadurch gekennzeichnet, daß die Membran zusammengesetzt ist aus
- einer Stützmembran, die für die Beschichtung geeignet ist,
- einer ersten Beschichtung bestehend aus einem die Schicht aufbauenden Polymer, das ein organisches Polymer mit Silanseitengruppen ist, wobei die Dicke der Schicht im Bereich zwischen 0,1 und 10 µm liegt und die Schicht eine Selektivität gegenüber O₂/N₂ zwischen 1,2 und 3 und eine Sauerstoff-Permeabilität zwischen 5 und 5000.10⁻¹² m/Pa.s besitzt,
- einer zweiten Beschichtung, bestehend aus einem die Schicht aufbauenden Polymer, das ein aromatischer Polyester und/oder ein aromatisches Polyimid und/oder ein aromatisches Polyamid und/oder ein aromatisches Polysulfon und/oder ein Polyphenylenoxid ist, wobei die Dicke der Schicht im Bereich zwischen 0,01 und 1 µm liegt und die Schicht eine Selektivität gegenüber Sauerstoff/Stickstoff zwischen 1 und 10 und eine Sauerstoff-Permeabilität zwischen 0,1 und 10.10⁻¹² m/Pa.s besitzt,
- und gegebenenfalls einer dritten Beschichtung, bestehend aus einem Polymer, das sich von wenigstens einem der Polymeren der ersten und zweiten Beschichtung unterscheidet,
- wobei die Abtrennfestigkeit der Mehrschichten-Beschichtung gegen Druck höher ist als 5 bar.

15. Membran für die Gastrennung nach Anspruch 14, dadurch gekennzeichnet, daß die dritte Beschichtung zwischen der ersten und der zweiten Beschichtung liegt.

16. Membran für die Gastrennung nach Anspruch 14, dadurch gekennzeichnet, daß die dritte Beschichtung auf die zweite Beschichtung aufgetragen ist.

17. Membran für die Gastrennung nach Anspruch 14, dadurch gekennzeichnet, daß auf der dritten Schicht noch weitere Schichten aufgetragen sind.

## Claims

1. Method for the preparation of a multilayer membrane for the separation of gas mixtures, with the membrane consisting of a polymeric supporting membrane having a void volume of more than 50% and a coating of at least two separating layers of at least two different polymers, characterised in that the hollow capillary serving as supporting membrane is passed through the central bore of a nozzle and that the nozzle possesses one or more concentric annular slots and/or annular slits, through which respectively a solution of the polymers forming the separating layers is applied to the supporting membrane, with the nozzle opening into an enclosed space, wherein the solvent or solvents of the polymer solutions are vaporised and removed and the coated supporting membrane is withdrawn from the space and, optionally after a post-treatment with heat and/or liquids, is wound up.

2. Method according to claim 1, characterised in that the solution(s) are permitted to flow freely under inherent hydrostatic pressure out of the annular slots and/or annular slits.

3. Method according to claim 1, characterised in that the solution(s) are ejected, under pressure produced by metering pumps, out of the annular slots and/or annular slits.

4. Method according to claims 2 or 3, characterised in that the pressure is adjusted and maintained constant according to the slot width.

5. Method according to one or more of claims 1 to 4, characterised in that different solvents are used for different polymer solutions.

6. Method according to one or more of claims 1 to 5, characterised in that the polymer solutions are not or are only to a small extent miscible with one another.

7. Method according to one or more of claims 1 to 6, characterised in that one of the polymers constituting the separating layer is an organic polymer having lateral silane groups.

8. Method according to one or more of claims 1 to 7, characterised in that an aromatic polyester and/or an aromatic polyimide and/or an aromatic polyamide and/or an aromatic polysulphone and/or a polyphenylene oxide is used as one of the polymers constituting the separating layer.

9. Method according to one or more of claims 1 to 8, characterised in that the nozzle is designed as a divisible nozzle.

10. Method according to claim 9, characterised in that in order to introduce the hollow capillary serving as supporting membrane, the divisible nozzle is opened and subsequently reassembled.

11. Method according to one or more of claims 1 to 10, characterised in that a nozzle is used which possesses several central bores each having at least two concentric annular slots and/or annular slits.

12. Method according to claim 11, characterised in that the respective polymer solution is led from a connected canal system to the corresponding annular slots and/or annular slits.

13. Method according to one or more of claims 1 to 12, characterised in that a nozzle is used which possesses at least two concentric annular slots and/or annular slits for each central bore, with the annular slots and/or annular slits opening at a clear distance from one another.

14. Membrane for the separation of gases, prepared by a method according to claims 1 to 13, characterised in that the membrane is composed of
- a supporting membrane, which is suitable for the coating,
- a first coating consisting of a polymer constituting the layer, which polymer is an organic polymer having lateral silane groups, with the thickness of the layer being in the range of between 0.1 and 10 µm and the layer possessing a selectivity towards O₂/N₂ of between 1.2 and 3 and an oxygen permeability of between 5 and 5000.10⁻¹² m/Pa.s,
- a second coating, consisting of a polymer constituting the layer, which polymer is an aromatic polyester and/or an aromatic polyimide and/or an aromatic polyamide and/or an aromatic polysulphone and/or a polyphenylene oxide, with the thickness of the layer being in the range of between 0.01 and 1 µm and the layer possessing a selectivity towards oxygen/nitrogen of between 1 and 10 and an oxygen permeability of between 0.1 and 10.10⁻¹² m/Pa.s,
- and optionally a third coating, consisting of a polymer which differs from at least one of the polymers of the first and second coating,
- with the resistance to separation of the multilayer coating against pressure being higher than 5 bar.

15. Membrane for the separation of gases according to claim 14, characterised in that the third coating is between the first and the second coating.

16. Membrane for the separation of gases according to claim 14, characterised in that the third coating is applied to the second coating.

17. Membrane for the separation of gases according to claim 14, characterised in that yet further layers are applied to the third layer.

## Revendications

1. Procédé pour la préparation d'une membrane multi-couches pour la séparation de mélanges de gaz, laquelle membrane est composée d'une membrane support en polymère ayant un volume creux supérieur à 50 % et d'un revêtement comportant au moins deux couches de séparation constituées d'au moins deux polymères différents, caractérisé en ce que l'on fait passer le capillaire creux servant de membrane support par le trou central d'une buse de filière et en ce que la buse de filière possède une ou plusieurs fentes et/ou gorges annulaires concentriques par lesquelles la solution de polymère formant chaque couche de séparation est appliquée sur la membrane support, la buse de filière aboutissant dans un espace fermé dans lequel le ou les solvant(s) des solutions de polymère est/sont évaporé(s) et éliminé(s), en ce que l'on tire de cet espace la membrane support enrobée et en ce qu'on l'enroule éventuellement après un post-traitement par de la chaleur et/ou des liquides.

2. Procédé conforme à la revendication 1, caractérisé en ce que l'on laisse s'écouler librement la ou les solution(s) sous sa propre pression hydrostatique par les fentes et/ou gorges annulaires.

3. Procédé conforme à la revendication 1, caractérisé en ce que la ou les solution(s) sont extrudées sous pression à travers les fentes et/ou gorges annulaires, laquelle pression est créée par des pompes de dosage.

4. Procédé conforme à la revendication 2 ou 3, caractérisé en ce que la pression est ajustée en fonction de la largeur des fentes et est maintenue constante.

5. Procédé conforme à une ou plusieurs des revendications 1 à 4, caractérisé en ce que l'on utilise différents solvants pour les différentes solutions de polymères.

6. Procédé conforme à une ou plusieurs des revendications 1 à 5, caractérisé en ce que les solutions de polymère sont non miscibles ou faiblement miscibles entre elles.

7. Procédé conforme à une ou plusieurs des revendications 1 à 6, caractérisé en ce qu'un des polymères formant la couche de séparation est un polymère organique comportant des groupes latéraux de type silane.

8. Procédé conforme à une ou plusieurs des revendications 1 à 7, caractérisé en ce qu'un des polymères formant la couche de séparation est un polyester aromatique et/ou un polyimide aromatique et/ou un polyamide aromatique et/ou une polysulfone aromatique et/ou un poly(oxyde de phénylène).

9. Procédé conforme à une ou plusieurs des revendications 1 à 8, caractérisé en ce que la buse de filière est une buse démontable.

10. Procédé conforme à la revendication 9, caractérisé en ce que l'on ouvre la buse de filière démontable afin d'y introduire le capillaire creux servant de membrane support et en ce que la filière est ensuite réassemblée.

11. Procédé conforme à une ou plusieurs des revendications 1 à 10, caractérisé en ce que l'on utilise une buse de filière comportant plusieurs trous centraux entourés chacun d'au moins deux fentes et/ou gorges annulaires concentriques.

12. Procédé conforme à la revendication 11, caractérisé en ce que l'on alimente chaque fente et/ou gorge annulaire avec la solution de polymère correspondante provenant d'un système de canalisation relié.

13. Procédé conforme à une des revendications 1 à 12, caractérisé en ce que l'on utilise une buse de filière comportant au moins deux fentes et/ou gorges annulaires concentriques pour chaque trou central, les fentes et/ou gorges annulaires débouchant à une certaine distance l'une par rapport à l'autre.

14. Membrane pour la séparation de gaz, préparée selon un procédé conforme aux revendications 1 à 13, caractérisée en ce que la membrane est composée
- d'une membrane support appropriée pour recevoir un revêtement,
- d'un premier revêtement composé d'un polymère formant la couche, qui est un polymère organique à groupes latéraux de type silane, l'épaisseur de la couche étant comprise entre 0,1 et 10 µm et la couche ayant une sélectivité O₂/N₂ comprise entre 1,2 et 3 et une perméabilité à l'oxygène comprise entre 5 et 5000.10⁻¹² m/Pa.s,
- d'un deuxième revêtement composé d'un polymère formant la couche, qui est un polyester aromatique et/ou un polyimide aromatique et/ou un polyamide aromatique et/ou une polysulfone aromatique et/ou un poly(oxyde de phénylène), l'épaisseur de la couche étant comprise entre 0,01 et 1 µm, et la couche ayant une sélectivité O₂/N₂ comprise entre 1 et 10 et une perméabilité à l'oxygène comprise entre 0,1 et 10.10⁻¹² m/Pa.s,
- et éventuellement d'un troisième revêtement composé d'un polymère différent d'au moins un des polymères du premier et deuxième revêtement,
- la résistance au décollement par pression du revêtement multi-couches étant supérieure à 5 bars.

15. Membrane pour la séparation de gaz conforme à la revendication 14, caractérisée en ce que le troisième revêtement est inséré entre le premier et le deuxième revêtement.

16. Membrane pour la séparation de gaz conforme à la revendication 14, caractérisée en ce que le troisième revêtement est appliqué sur le deuxième revêtement.

17. Membrane pour la séparation de gaz conforme à la revendication 14, caractérisée en ce que d'autres couches de revêtement sont déposées sur la troisième couche de revêtement.
